# EUROPEAN PATENT SPECIFICATION

(11) **EP 0 872 304 B1**
(45) Date of publication and mention of the grant of the patent: **07.08.2002**
(21) Application number: 95929225.1
(22) Date of filing: 24.08.1995
(51) Int. Cl.: B23Q 1/25, B23Q 3/18, F16H 35/00

(54) **ROTATIONAL MOTION MECHANISM**
ROTIERENDER BEWEGUNGSMECHANISMUS
MECANISME A MOUVEMENT TOURNANT

(30) Priority: 14.04.1995 JP 8975895
(43) Date of publication of application: 21.10.1998
(73) Proprietor: Yugen Kaisha Sozoan, Matsumoto-shi, Nagano 390-03 (JP)
(72) Inventor: YANAGISAWA, Ken Yugen Kaisha Sozoan, Nagano 390-03 (JP)
(74) Representative: Sanderson, Michael John
(86) International application number: JP9501687
(87) International publication number: WO9632223

(56) References cited:
- JP-A- 7 012 200
- JP-A- 7 051 962
- US-A- 3 048 059
- US-A- 5 481 936

## Description

### FIELD OF TECHNOLOGY

The present invention relates to a rotary drive system, more precisely relates to a rotary drive system, which is capable of rotating an output shaft or a rotor on its own axis.

### BACKGROUND OF TECHNOLOGY

An index table for machining works is known as an example of the rotary drive system. In the conventional index table, an output shaft is rotated on its axis by a motor and a reduction gears, so that a rotary table, which is fixed to the output shaft, is rotated.

The rotary table is rotated in a prescribed angle for each machining step. To rotate the rotary table for precise positioning of the works, the rotational angle of the rotary table must be precisely controlled. The precise control of the rotary table is executed by controlling the rotation of the output shaft of the rotary table or the motor.

However, the above described conventional index table, for example, has a following disadvantage.

As described above, the rotational angle of the rotary table is controlled by controlling the rotational angle of the output shaft of the rotary table. Even if the output shaft is rotated by a precise mechanism, it is unavoidable to make errors of the the rotational angle of the output shaft and the rotary table. To make wide machining spaces, the works are located in the vicinity of an outer edge of the rotary table. Thus, said errors are enlarged at the positions of the works even if said errors are small for the output shaft. So it is very difficult to raise the positioning accuracy of the works.

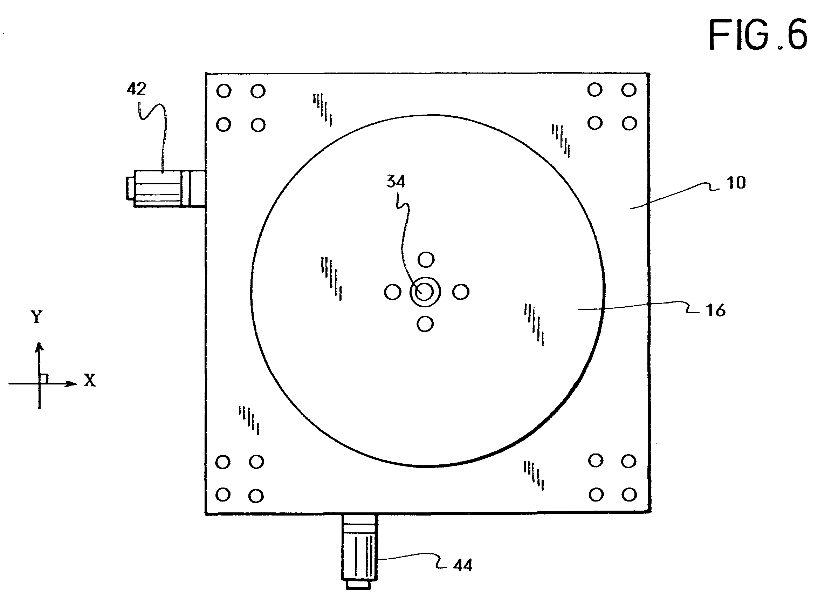

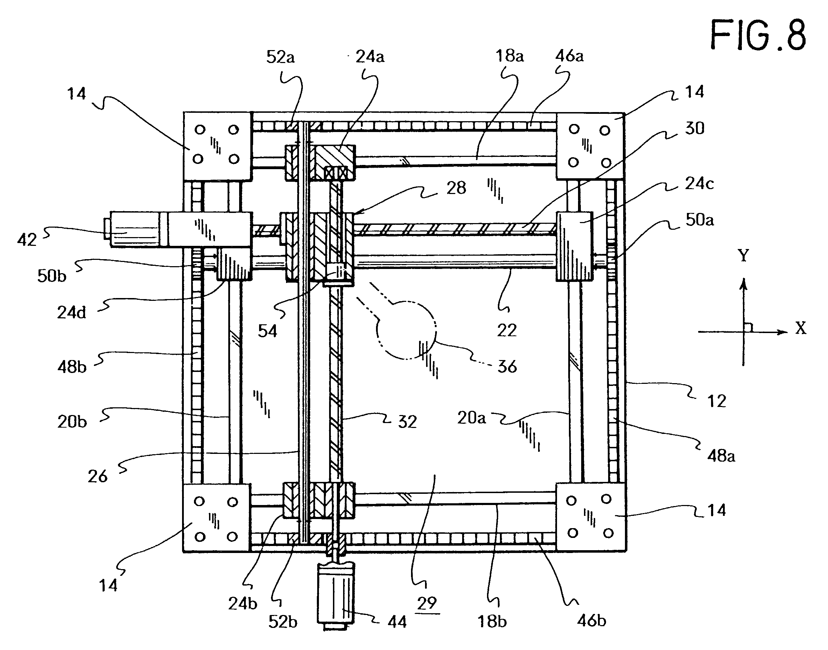

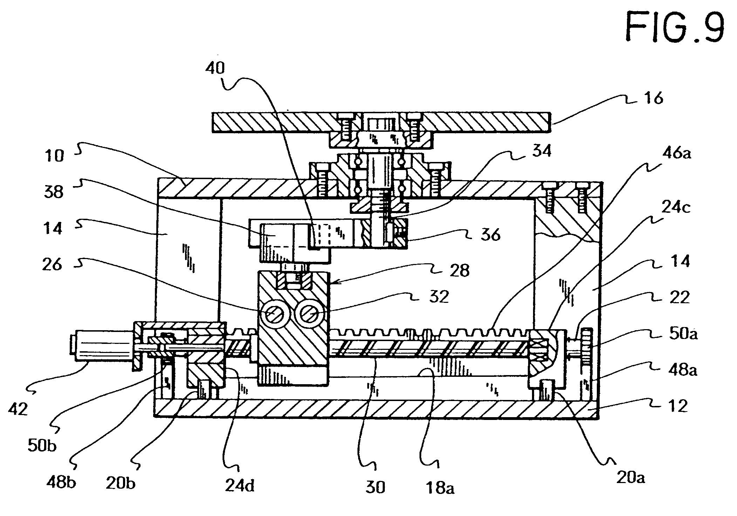

To solve the above described disadvantage, the inventor invented a rotary drive system, according to the preamble of claim 1, which was disclosed in Japanese Patent Kokai Gazette No.7-12200. The rotary drive system is shown in Figs. 6-9. Note that, the rotary drive system shown in Figs. 6-9 is applied to an index table.

A system proper includes an upper cover 10 and a lower cover 12. The upper cover 10 and the lower cover 12 are connected by connecting blocks 14, which are provided at four corners of the system proper.

A rotary table 16 is rotatably provided above the upper cover 10. For example, works to be machined (not shown) will be mounted on an upper face of the rotary table 16. The rotary table 16 is turned with progress of the machining so as to place the works at the prescribed positions.

A pair of X-guides (first guides) 18a and 18b are provided mutually parallel in an X-direction (first direction). The X-guides 18a and 18b are linear guides, which are fixed on an upper face of the lower cover 12.

A pair of Y-guides (second guides) 20a and 20b are provided mutually parallel in an Y-direction (second direction). The Y-guides 20a and 20b are arranged in the direction perpendicular to the X-guides 18a and 18b. The Y-guides 20a and 20b are linear guides, which are fixed on the upper face of the lower cover 12.

An X-rod (first moving guide) 22 is provided in parallel to the X-guides 18a and 18b. The X-rod 22 is rotatable pierced through sliders 24c and 24d, which are capable of sliding on the Y-guides 20a and 20b in the Y-direction. With this structure, the X-rod 22 is capable of moving in the Y-direction together with the sliders 24c and 24d in the state of being parallel to the X-guides 18a and 18b. Note that, the axial movement of the X-rod 22, with respect to the sliders 24c and 24d, is limited by snap rings attached thereon.

A Y-rod (second moving guide) 26 is provided in parallel to the Y-guides 20a and 20b. The Y-rod 26 is rotatable pierced through sliders 24a and 24b, which are capable of sliding on the X-guides 18a and 18b in the X-direction. With this structure, the Y-rod 26 is capable of moving in the X-direction together with the sliders 24a and 24b in the state of being parallel to the Y-guides 20a and 20b. Note that, the axial movement of the Y-rod 26, with respect to the sliders 24a and 24b, is limited by snap rings attached thereon.

A moving body 28 has a lower part and an upper part, the X-rod 22 is rotatably pierced through the lower part; the Y-rod 26 is rotatably pierced through the upper part. The moving body 28 is capable of moving on the X-rod 22 in the X-direction and on the Y-rod 26 in the Y-direction with slide bearings. Thus, the moving body 28 is capable of doing two dimensional movement in a rectangular plane 29, which is enclosed by the X-guides 18a and 18b and the Y-guides 20a and 20b.

An X-ball screw 30, which has high accuracy and acts as a first ball screw, is arranged in the X-direction and rotatably spanned between the sliders 24c and 24d. The X-ball screw 30 is screwed with a ball nut (not shown), which is fixed in the lower part of the moving body 28. Thus, the moving body 28 is moved in the X-direction when the X-ball screw 30 rotates on its axis. With the movement, the Y-rod 26, the sliders 24a and 24b, etc. are moved in the X-direction together with the moving body 28.

A Y-ball screw 32, which has high accuracy and acts as a second ball screw, is arranged in the Y-direction and rotatably spanned between the sliders 24a and 24b. The Y-ball screw 32 is screwed with a ball nut 54, which is fixed in the upper part of the moving body 28. Thus, the moving body 28 is moved in the Y-direction when the Y-ball screw 32 rotates on its axis. With the movement, the X-rod 22, the sliders 24c and 24d, etc. are moved in the Y-direction together with the moving body 28.

An output shaft 34 is provided in the upper cover 10 with ball bearings and capable of rotating about its axis in the ball bearings. An upper end section of the output shaft 34 is projected from an upper face of the upper cover 10 and fixed to a center of the rotary table 16. Thus, the rotary table 16 is rotated about its axis when the output shaft 24 is rotated.

A lever 36 makes the output shaft 34 rotate when the moving body 28 moves round the output shaft 34. An outer end section of the lever 36 is slidably fitted in a groove 40 of a connecting member 38, which is rotatably attached to the moving body 28 with a bearing. With this structure, the moving body 28 is rotatably connected and capable of moving in the longitudinal direction of the lever 36. On the other hand, an inner end section of the lever 36 is fixed to a lower end of the output shaft 34.

A first motor 42 makes the X-ball screw 30 rotate. The first motor 42 is a servo motor having locking mechanism and being mounted on the slider 24d. The rotational direction of the X-ball screw 30 or the moving direction of the moving body 28, etc. in the X-axis is defined by selecting the rotational direction of the first motor 42.

A second motor 44 makes the Y-ball screw 31 rotate. The second motor 44 is a servo motor having locking mechanism and being mounted on the slider 24b. The rotational direction of the Y-ball screw 32 or the moving direction of the moving body 28, etc. in the Y-axis is defined by selecting the rotational direction of the second motor 44.

X-racks 46a and 46b are fixed on the upper face of the lower cover 12, and provided in the X-direction mutually parallel.

Y-racks 48a and 48b are fixed on the upper face of the lower cover 12, and provided in the Y-direction mutually parallel.

Y-pinions 50a and 50b are respectively fixed at each end of the X-rod 22, whose both end sections are projected outward from the sliders 24c and 24d. The Y-pinions 50a and 50b are respectively engaged with the Y-racks 48a and 48b. When the X-rod 22 is moved in the Y-direction together with the moving body 28, the Y-pinions 50a and 50b rotate on the Y-racks 48a and 48b. At that time, the X-rod 22 rotates about its axis together with the Y-pinions 50a and 50b. Even if external force, which attempts to incline the X-rod 22 with respect to the X-axis, works during the X-rod 22 is rotated and moved, the Y-pinions 50a and 50b and the Y-racks 48a and 48b, which are mutually engaged, can always keep the X-rod 22 parallel to the X-guides 18a and 18b.

X-pinions 52a and 52b are respectively fixed at each end of the Y-rod 26, whose both end sections are projected outward from the sliders 24a and 24b. The X-pinions 52a and 52b are respectively engaged with the X-racks 46a and 46b. When the Y-rod 26 is moved in the X-direction together with the moving body 28, the X-pinions 52a and 52b rotate on the X-racks 46a and 46b. At that time, the Y-rod 26 rotates about its axis together with the X-pinions 52a and 52b. Even if external force, which attempts to incline the Y-rod 26 with respect to the Y-axis, works during the Y-rod 26 is rotated and moved, the X-pinions 52a and 52b and the X-racks 46a and 46b, which are mutually engaged, can always keep the Y-rod 26 parallel to the Y-guides 20a and 20b.

Next, the action of the index table will be explained.

The rotation of the X-ball screw 30 and the Y-ball screw 32 are controlled by a control unit, which includes a microprocessor, and which controls the first motor 42 and the second motor 44.

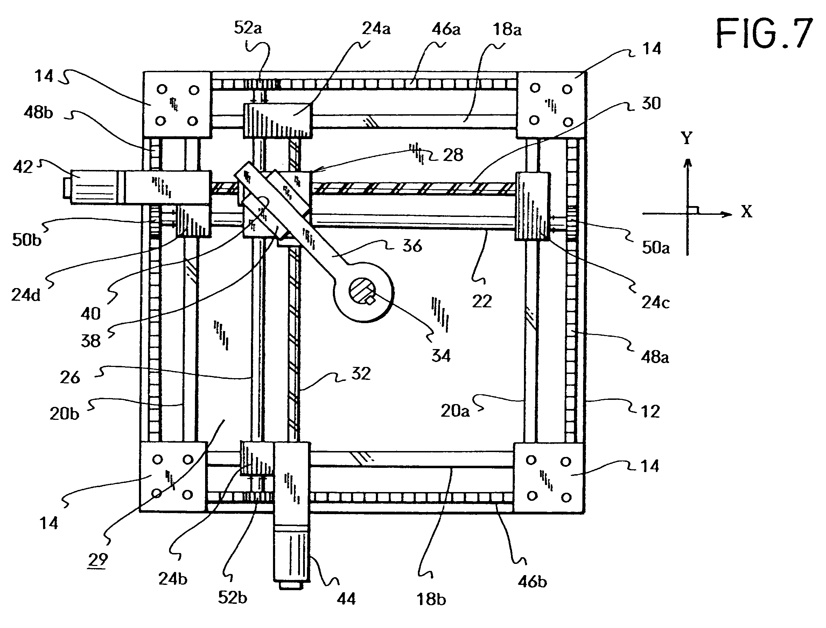

In the state shown in Fig. 7, for example, the first motor 42 is driven to rotate the X-ball screw 30 so as to move the moving body 28 rightward in the X-direction.

When the moving body 28 reaches the prescribed position of the right side in the X-direction, the first motor 42 is stopped, then the second motor 44 is driven to rotate the Y-ball screw 32 so as to move the moving body 28 downward in the Y-direction.

When the moving body 28 reaches the prescribed position of the lower side in the Y-direction, the second motor 44 is stopped, then the first motor 42 is driven to rotate the X-ball screw 30 so as to move the moving body 28 leftward in the X-direction.

When the moving body 28 reaches the prescribed position of the left side in the X-direction, the first motor 42 is stopped, then the second motor 44 is driven to rotate the Y-ball screw 32 so as to move the moving body 28 upward in the Y-direction.

With above described actions, the moving body 28 can be moved round the output shaft 34 in the clockwise direction with a rectangular track. While the moving body 28 is moved along the rectangular track, the outer end section of the lever 36 is able to rotate and move in the longitudinal direction thereof because said outer end section is fitted with the connecting member 38 of the moving body 28. Namely, the lever 36 works as a crank, so that the output shaft 34 is rotated in the clockwise direction. With the rotation of the output shaft 34, the rotary table 16 is also rotated in the same direction. Note that, to rotate the output shaft 34 and the rotary table 16 in the counterclockwise direction, the first motor 42 and the second motor 44 are driven in the reverse direction to move the moving body 28 in the counterclockwise direction with a rectangular track.

The rotational angle of the rotary table 16 can be controlled by the X-Y positions of the moving body 28. The X-Y positioning accuracy of the moving body 28 is quite high because the X-ball screw 30 and the Y-ball screw 32 are driven by the servo motors 42 and 44. Additionally, the moving body 28 always corresponds to the outer end section of the lever 36, which is a part of the lever having the longest rotational track. Thus, many positioning points, which can be defined by the positioning of the moving body, can be set on the long rotational track. Namely, the control resolution of the X-Y positions of the moving body 28 can be raised, so that the control resolution of the rotational angle of the output shaft 34 and the rotary table 16 can be raised. If the moving body is rotatably connected to the inner end section of the lever 36, the rotational track of said section is so short, so that the resolution of the rotational angle of the output shaft 34, etc. cannot be raised.

Since the moving body 28 drives the-outer end section of the lever 36, the rotational torque of the output shaft can be greater, so that the rotary table 16 can be easily rotated if it is heavy.

Furthermore, since the X-ball screw 30 and the Y-ball screw 32 have locking function, which are caused by the first motor 42 and the second motor 44, and the X-pinions 52a and 52b and the Y-pinions 50a and 50b are respectively engaged with the X-racks 46a and 46b and the Y-racks 48a and 48b, the holding torque for holding the rotary table 16 can be greater while the motors 42 and 44 are stopped.

### TECHNICAL PROBLEMS

However, in the rotary drive system shown in Figs. 6-9, errors caused by inclination of the shaft 34 and deformation of the lever 36 are apt to generate, so it is difficult to guarantee higher operating accuracy and highly stable operation. Further, vertical thickness of the system must be thicker due to the vertical output shaft 34.

### DISCLOSURE OF THE INVENTION

An object of the present invention is to provide the rotary drive system, which is capable of controlling the rotational angle of the rotor with higher accuracy and which is made small in size.

To achieve the object, the rotary drive system of the present invention has following structures.

The rotary drive system of the present invention comprises:
a moving body being capable of moving in a two dimentional plane;
driving means for moving the moving body;
a ring bearing being formed into a ring, the ring bearing being provided in a plane parallel to the two dimensional plane;
a rotor being held by the ring bearing, the rotor being capable of rotating about own axis;
a guide section being provided on one face of the rotor, the guide section being arranged in a radial direction with respect to the axis of the rotor; and
a connecting member being provided to the moving body, the connecting member being capable of rotating about own axis parallel to the axis of the rotor, the connecting member being connected with the guide section and capable of moving in the longitudinal direction thereof, whereby the connecting member and the guide section rotate the rotor with the movement of the moving body.

The rotary drive system may further comprise:
a first guide means being provided in the two dimensional plane and arranged in a first direction, the first guide means guiding the movement of the moving body in the first direction; and
a second guide means being provided in the two dimensional plane and arranged in a second direction perpendicular to the first direction, the second guide means guiding the movement of the moving body in the second direction,
wherein the driving means includes a first driving means for moving the moving body in the first direction, and a second driving means for moving the moving body in the second direction.

In this case, the first guide means may be a pair of first guides arranged parallel in the first direction,
the second guide means may be a pair of second guides arranged parallel in the second direction, and
the rotary drive system may further comprise:
a first moving guide being arranged parallel to the first guides, each end of the first moving guide being movably connected each second guide, whereby the first moving guide is capable of moving in the second direction along the second guides; and
a second moving guide being arranged parallel to the second guides, each end of the second moving guide being movably connected each first guide, whereby the second moving guide is capable of moving in the first direction along the first guides,
wherein the moving body is capable of moving on the first moving guide and the second moving guide,
wherein the first driving means moves the second moving guide in the first direction together with the moving body, and
wherein the second driving means moves the first moving guide in the second direction together with the moving body.

Further, in the rotary drive system, a plurality of the rotors, each of which has the guide section, may be provided, and
a plurality of the connecting members, each of which is connected with each guide section of each rotor, may be provided to the moving body to synchronously rotate the rotors.

In the rotary drive system of the present invention, the rotor is held by the ring bearing and capable of rotating about its own axis; the guide section is provided on the one face of the rotor and arranged in the radial direction with respect thereto; and the connecting member is provided to the moving body, capable of rotating, connected with the guide section and capable of moving in the longitudinal direction thereof; whereby the rotor is rotated by the movement of the moving body.

With this structure, a connecting position between the rotor and the moving body can be separate away, as far as possible, from a center of the rotor, so that the resolution of the rotational angle of the rotor can be raised.

Driving force can be applied to the rotor at a position separate away from the center of the rotor, so greater rotary torque can be gained.

Since the connecting member is rotatably provided to the moving body and movably connected with the guide section, the rotational angle of the rotor can be controlled by moving the moving body with optional tracks, so the rotary drive system can be applied to various kind of mechanisms.

Since the rotor is rotatably held by the ring bearing, and the guide section is directly provided to the rotor, the inclination of the output shaft and the deformation of the lever, which are generated in the rotary drive system shown in Figs. 6-9, can be prevented. By preventing the inclination and the deformation, the rotational angle of the rotor can be controlled with higher accuracy.

Further, since the guide section is directly provided to the rotor, a vertical output shaft, which is provided to the rotary drive system shown in Figs. 6-9, is not required, so the rotary drive system of the present invention can be small in size.

### BRIEF DESCRIPTION OF THE DRAWINGS

Fig. 1 is a front sectional view of the rotary drive system of First Embodiment of the present invention;
Fig. 2 is a partially sectional perspective view of the rotary drive system of Second Embodiment of the present invention;
Fig. 3 is a partially sectional plan view of a driving mechanism for moving the moving body of the Second Embodiment;
Fig. 4 is a partially sectional perspective view of the rotary drive system of Third Embodiment of the present invention;
Fig. 5 is a partially sectional plan view of another driving means;
Fig. 6 is a plan view of the conventional rotary drive system;
Fig. 7 is a plan view of the inner mechanisms of the rotary drive system shown in Fig. 6;
Fig. 8 is a partially sectional plan view of the inner mechanism of the moving body, etc. of the rotary drive system shown in Fig. 6; and
Fig.9 is a front sectional view of the rotary drive system shown in Fig. 6.

### EMBODIMENTS

Preferred embodiments of the present invention will now be described in detail with reference to the accompanying drawings.

### [First Embodiment]

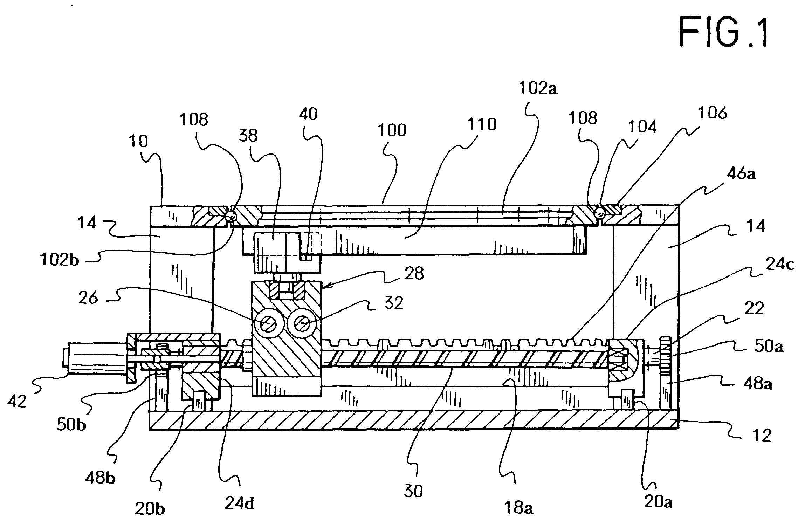

First Embodiment will be explained with reference to Fig. 1 (the front sectional view). Note that, structural elements shown in Figs. 6-9 are assigned the same symbols, and explanation will be omitted. In the First Embodiment, an index table will be explained as an example of the rotary drive system.

In the conventional rotary drive system shown in Figs. 6-9, the rectangular movement of the moving body 28 is converted into the rotation of the rotary table 16 by the lever 36 and the output shaft 34. While in the First Embodiment, the rectangular movement of the moving body 28 is converted into the rotation of a rotary table 100, which acts as the rotor, without using the output shaft 34.

There is formed a circular groove 102a on an outer circumferential face of the rotary table 100. There is formed a center hole 104 in a center part of the upper cover 10, and a ring retainer 106 is fixed on an inner edge of the center hole 104. By fixing the retainer 106, there is formed a circular groove 102b on an inner circumferential face of the center hole 104. The grooves 102a and 102b are mutually faced, and there are rotatably held a plurality of metal balls 108 therebetween to form a ball bearing. With this structure, the rotary table 100 can be rotated in the center hole 104. Namely the rotary table 100 is rotatably held by the ball bearing, which acts as the ring bearing coaxial to the rotary table 100.

A lever 110 is directly fixed on a bottom face of the rotary table 100. The lever 110is provided in the radial direction with respect to the center of the rotary table 100. An outer end section of the lever 110 is slidably fitted in the groove 40 of the connecting member 38, which is rotatably attached to the moving body 28. Namely, the lever 110 acts as the guide section; the connecting member 38, which is rotatably attached to the moving body 28, is attached to the lever 110 and capable of sliding in the longitudinal direction of the lever. Note that, the lever 110must be provided in the radial direction with respect to the center of the rotary table 110 but its length is not limited. The lever 110, for example, may have the length equal to the diameter of the rotary table 100, and it may be shorter or longer than the diameter of the rotary table 100.

In the First Embodiment, the lever 110 is connected with the rotary table 100 by the connecting member 38 in the ball bearing (the ring bearing), which holds the rotary table 100. Since the inner diameter of the ring bearing is greater than that of the conventional rotary drive system shown in Figs. 6-9, the positioning accuracy of the rotary table can be higher. In the First Embodiment too, the moving body 28 is moved with the rectangular track by controlling the first motor 42 and the second motor 44. Since the outer end section of the lever 110 is slidably fitted in the connecting member 38, the lever is capable of rotating and moving its longitudinal direction with respect to the moving body 28. Thus, the lever 110 is capable of rotating the rotary table 100 as a crank.

In the First Embodiment, the rotary table 16 has no output shaft 34, which is provided to the conventional rotary drive system shown in Figs. 6-9, and the rotary table 100 is provided in a center hole 104 of the upper cover 10, so that the vertical thickness of the rotary drive system can be thinner, and the size thereof can be small. Since the lever 110 is fixed on the bottom face of the rotary table 100, so that the deformation of the lever 110 caused by bending moment can be prevented in comparison with the conventional rotary drive system shown in Figs. 6-9.

Note that, the track of the moving body 28 is not limited to the rectangular track, namely optional tracks, e.g., a circular track, may be employed. If the circular track is employed, the connecting member 38 is not slid with respect to the lever 110, so the circular track is preferable to movement with uniform rotary torque. In the case of rotating the rotary table 100, without greater rotary torque, at high speed, the track of the moving body 28 may be close to the center of the rotary table 100.

The rotary table 100 can be rotated by following movement of the moving body 28.

Firstly the moving body 28 is moved from a first position to a second position, which is a symmetrical position of the first position with respect to the center of the rotary table 100 so as to make the rotary table 100 a half turn. Then, the moving body 28 is moved to the first position along the lever 110. Further, the moving body 28 is moved from the first position to the second position again so as to make the rotary table 100 another half turn. Namely, the rotary table 100 can be rotated by moving the moving body 28 in a half of a plane, which is under the rotary table 100.

By this manner, the space can be efficiently used to move the rotary table.

### [Second Embodiment]

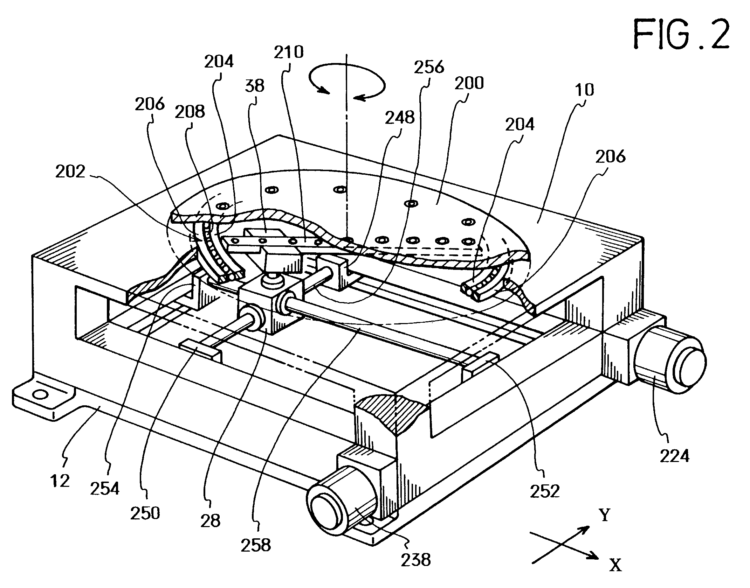

Second Embodiment will be explained with reference to Fig. 2. Note that, the rotary drive system of the Second Embodiment is also the index table, and structural elements shown in Figs. 6-9 and the First Embodiment are assigned the same symbols, and explanation will be omitted.

In the Second Embodiment, the rotary table 200 is rotatably provided to the upper cover 10 with a ball bearing 202. An inner part 204 of the ball bearing 202 is fixed to the rotary table 200; an outer part 206 thereof is fixed to the upper cover 10. A plurality of metal balls 208 are rotatably provided between the inner part 204 and the outer part 206 to form the ball bearing, so that the rotary table 200 can be rotated.

A lever 210 is directly fixed on a bottom face of the rotary table 200 as well as the First Embodiment.

As well as the First Embodiment, the connecting member 38 is rotatably attached to the moving body 28 and capable of moving (sliding) in the longitudinal direction of the lever 210, so the rotary table 200 is rotated by the movement of the moving body 28, which is connected with the lever 210.

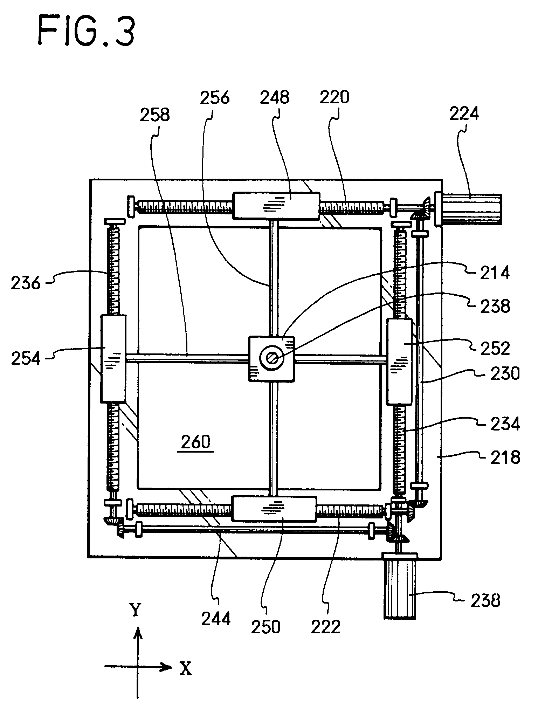

A driving mechanism (two dimensional driving mechanism) of the Second Embodiment, which is capable of moving the moving body 28 without revolving the moving body 28, will be explained. The driving mechanism is shown in Fig. 3.

A frame 218 is formed into a rectangle frame whose inner part is a hollow part.

X-ball screws 220 and 222 are provided parallel in the same plane. The X-ball screw 220 is directly rotated by an X-motor 224, which constitutes an X-driving means. Rotary torque of the X-motor 224 is transmitted to the X-ball screw 222 via a first transmitting mechanism including bevel gears and a transmitting shaft 230. Front ends (left ends in the drawing) of the X-ball screws 220 and 222 are respectively rotatably supported by supporting members. The X-ball screws 220 and 222 act as guides in the X-direction and constitute first driving means, which moves a slider 214, which is the moving body, in the X-direction, with the X-motor 224.

Y-ball screws 234 and 236 are provided parallel in the same plane and provided perpendicular to the X-ball screw 220 and 222. The Y-ball screw 234 is directly rotated by an Y-motor 238, which constitutes a Y-driving means. Rotary torque of the Y-motor 238 is transmitted to the Y-ball screw 236 via a second transmitting mechanism including bevel gears and a transmitting shaft 244. Front ends (lower ends in the drawing) of the Y-ball screws 234 and 236 are respectively rotatably supported by supporting members. The Y-ball screws 234 and 236 act as guides in the Y-direction and constitute second driving means, which moves the slider 214 in the Y-direction, with the Y-motor 238.

X-travellers 248 and 250 are respectively screwed with the X-ball screws 220 and 222. Rotation of the X-travellers 248 and 250 are prevented by a Y-rod 256, so the travellers can be simultaneously moved in the X-direction by rotating the X-ball screws 220 and 222 in the same direction.

Y-travellers 252 and 254 are respectively screwed with the Y-ball screws 234 and 236. Rotation of the Y-travellers 252 and 254 are prevented by an X-rod 258, so the travellers can be simultaneously moved in the Y-direction by rotating the Y-ball screws 234 and 236 in the same direction.

The Y-rod 256 is arranged parallel to the Y-axis and pierced through the slider 214. Ends of the Y-rod 256 are respectively fixed to the X-travellers 248 and 250. With this structure, the slider 214 is moved in the X-direction by moving the Y-rod 256 and X-travellers 248 and 250 in the X-direction.

The X-rod 258 is arranged parallel to the X-axis and pierced through the slider 214. Ends of the X-rod 258 are respectively fixed to the Y-travellers 252 and 254. The X-rod 258 and the Y-rod 256 are perpendicularly crossed in the slider 214. The slider 214 is moved in the Y-direction by moving the X-rod 258 and Y-travellers 252 and 254 in the Y-direction. By combination of the movement in the X-direction and the Y-direction, the slider 214 can be moved to any positions in a rectangular plane 260 with optional tracks. Since the Y-rod 256 and the X-rod 258 are perpendicularly crossed in the slider 214, the slider 214 cannot revolve in said plane, namely its heading with respect to the X-axis and the Y-axis are always fixed.

Note that, the Y-rod 256 and the X-rod 258 may be made of metal rods having enough toughness.

### [Third Embodiment]

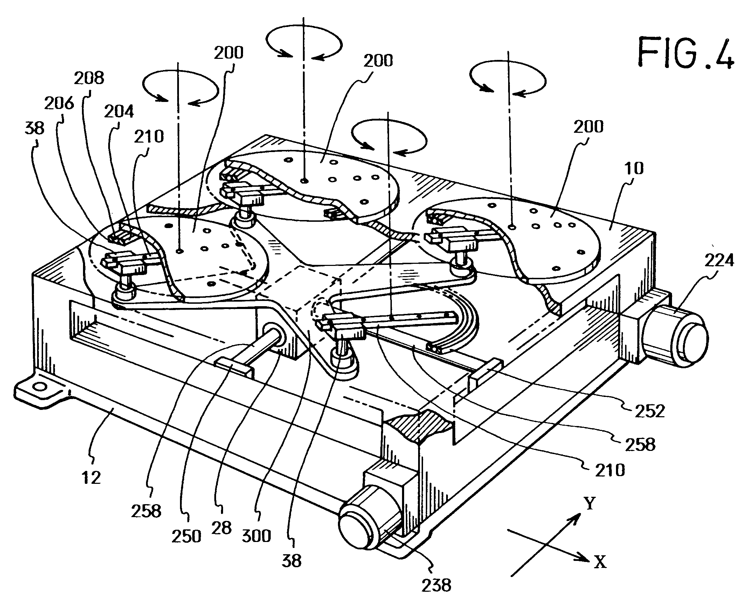

Third Embodiment will be explained with reference to Fig. 4. Note that, the rotary drive system of the Third Embodiment is also the index table, and structural elements shown in Figs. 6-9, the First Embodiment and the Second Embodiment are assigned the same symbols, and explanation will be omitted.

The difference between the Second Embodiment and the Third Embodiment is number of the rotary tables 200, namely a plurality (four in the present embodiment) of the rotary tables 200 are provided. In the Third Embodiment, the levers 210 are respectively fixed to each rotary table 200, and a plurality of the connecting members 38, each of which corresponds to each lever 210, are provided to the moving body 28, so that the rotary tables 200 can be rotated simultaneously.

To attach the connecting members 38 to the moving body 28, a cross-formed supporting member 300 is fixed on an upper face of the moving body 28. The connecting members 38 are respectively rotatably provided to an end of each extended section of the cross-formed supporting member 300.

In the Third Embodiment, the rotary tables can be simultaneously and equably rotated with high accuracy. By employing the rotary drive system of the present embodiment, data can be efficiently copied from one recording medium to another, and precise machining work can be efficiently executed.

Note that, a plurality of the rotary tables can be rotated by the conventional rotary drive system shown in Figs. 6-9, namely the conventional rotary drive system, which comprises: a plurality of the rotary tables 200; a plurality of the levers 210, each of which is provided to each rotary table 200; and a plurality of the connecting members 38, which is provided to the moving body 28, and each of which corresponds to each lever 210, can synchronously rotate a plurality of the rotors (rotary tables).

In the First to Third Embodiments, the outer ends of the levers 110 and 210 by the moving bodies 28, so that the control resolution of the rotary tables 100 and 200 can be raised. If the long levers 110 and 210 are employed, any guide means or driving means, whose accuracy is lower than that of the ball screws, e.g., a two dimensional driving mechanism which moves the moving body 28 in the X- and Y-directions, and which includes timing belts and timing pulleys shown, for example, in Fig. 14 of U.S. Pat. No. 4,995,277, can be employed. Namely, the rotary drive system of the present invention has possibilities of future development by employing any guide means or driving means other than the ball screws.

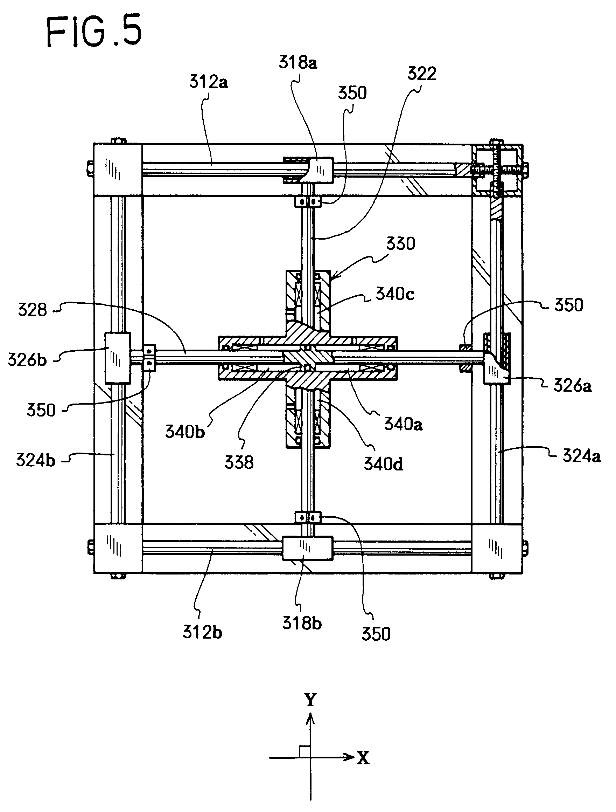

Another example of the driving means is shown in Fig. 5.

A pair of X-guides 312a and 312b, which act as the first guide means, are arranged parallel in the X-direction. A pair of Y-guides 324a and 324b, which act as the second guide means, are arranged parallel in the Y-direction.

A center part of an X-moving guide (rod) 328, which acts as the first moving guide, is formed into a large diameter section 338. Ends of the X-moving guide 328 are respectively slidably connected to the Y-guides 324a and 324b and capable of moving in the Y-direction. A center part of a Y-moving guide (rod) 322, which acts as the second moving guide, is formed into a large diameter section (not shown) as well as the X-moving guide 328. Ends of the Y-moving guide 322 are respectively slidably connected to the X-guides 312a and 312b and capable of moving in the X-direction.

A moving body 330 is capable of moving on the X-moving guide 328 and the Y-moving guide 322. Inner spaces of the moving body 330 are divided into chambers 340a, 340b, 340c and 340d by the large diameter sections. A fluid, e.g., compressed air, compressed oil, compressed water, is selectively supplied to and discharged from the chambers 340a, 340b, 340c and 340d so as to move the moving body 330 in the two dimensional plane. The moving body 330 is capable of rotating the rotor (rotary table) with the connecting member and the guide section (not shown) as well as above described embodiments.

The stroke of the moving body 330 can be defined by stoppers 350, so the four planar positions of the rotary table can be defined by the stoppers 350.

If any means for adjusting amount of the fluid, e.g., a fluid control valve, is employed, amount of the fluid which is supplied to the chambers 340a, 340b, 340c and 340d can be adjusted, so that the moving body 330 can be moved with optional tracks, and the rotary table can be optionally positioned.

By the driving means employing the fluid pressure, the moving body 330 can be stably moved in the two dimensional plane. The rotary drive system may be employed to effectively rotate a very big and heavy rotor, e.g., a rotatable building. Note that, besides the driving means shown in Fig. 5, cylinder units, which is driven by the fluid, for moving X-travellers 318a and 318b and Y-travellers 326a and 326b may be employed as the driving means.

The driving means for moving the moving body in the two dimensional plane is not limited to the driving mechanisms shown in the above embodiments, an X-Y table, for example, which comprises: a sub moving body capable of moving along an X-guide; a Y-guide fixed on the sub moving body and extended in the Y-direction; and a main moving body capable of moving along the Y-guide, may be employed as the driving means. Further, a horizontal multi-joint robot may be employed as the driving means.

Means for detecting actual rotational angle of the rotary tables 100 and 200, e.g., an encoder, may be added. Further, linear guides, which are fixed on plates, and to which the moving body 28 is slidably fitted, may be employed as the first and the second moving guides instead of the rods.

The preferred embodiments of the present invention have been described in detail, but the present invention is not limited to the above described embodiments, many modifications can be allowed without deviating the spirit of the invention.

## Claims

1. A rotary drive system,
comprising:
a moving body (28, 330) being capable of moving in a two dimensional plane (260);
driving means (30, 44, 224, 220, 222, 234, 236, 238, 340a, 340b, 340c, 340d) for moving said moving body (28, 330);
a ring bearing (102a, 102b, 108, 202) being formed into a ring, said ring bearing (102a, 102b, 108, 202) being provided in a plane parallel to the two dimensional plane (260);
a rotor (100, 200) being held by said ring bearing (102a, 102b, 108, 202), said rotor (100, 200) being capable of rotating about own axis;
a guide section (110, 210) being arranged in a radial direction with respect to the axis of said rotor (100, 200); and
a connecting member (38) being provided to said moving body (28, 330), said connecting member (38) being capable of rotating about own axis parallel to the axis of said rotor (100, 200), said connecting member (38) being connected with said guide section (110, 210) and capable of moving in the longitudinal direction thereof, whereby said connecting member (38) and said guide section (110, 210) rotate said rotor (100, 200) with the movement of said moving body (28, 330),
**characterized in that** said guide section (110, 210) is provided on one face of said rotor (100, 200).

2. The rotary drive system according to claim 1,
further comprising:
a first guide means (220, 222, 312a, 312b) being provided in the two dimensional plane (260) and arranged in a first direction (X), said first guide means (220, 222, 312a, 312b) guiding the movement of said moving body (28, 330) in the first direction (X); and
a second guide means (30, 234, 236, 324a, 324b) being provided in the two dimensional plane (260) and arranged in a second direction (Y) perpendicular to the first direction (X), said second guide means (30, 234, 236, 324a, 324b) guiding the movement of said moving body (28, 330) in the second direction (Y),
wherein said driving means includes a first driving means (224, 220, 222, 340a, 340b) for moving said moving body (28, 330) in the first direction (X), and a second driving means (30, 42, 238, 234, 236, 340c, 340d) for moving said moving body (28, 330) in the second direction (Y).

3. The rotary drive system according to claim 2,
wherein said first guide means are a pair of first guides (220, 222, 312a, 312b) arranged parallel in the first direction (X), and
wherein said second guide means are a pair of second guides (30, 234, 236, 324a, 324b) arranged parallel in the second direction (Y),
further comprising:
a first moving guide (258, 328) being arranged parallel to said first guides (220, 222, 312a, 312b), each end of said first moving guide (258, 328) being movably connected each second guide (30, 234, 236, 324a, 324b), whereby said first moving (258, 328) guide is capable of moving in the second direction (Y) along said second guides (30, 234, 236, 324a, 324b); and
a second moving guide (26, 256, 322) being arranged parallel to said second guides(30, 234, 236, 324a, 324b), each end of said second moving guide (26, 256, 322) being movably connected each first guide (220, 222, 312a, 312b), whereby said second moving guide (26, 256, 322) is capable of moving in the first direction (X) along said first guides (220, 222, 312a, 312b),
wherein said moving body (28, 330) is capable of moving on said first moving guide (258, 328) and said second moving guide (26, 256, 322),
wherein said first driving means (224, 220, 222, 340a, 340b) moves said second moving guide (26, 256, 322) in the first direction (X) together with said moving body (28, 330), and
wherein said second driving means (30, 42, 238, 234, 236, 340c, 340d) moves said first moving guide (258, 328) in the second direction (Y) together with said moving body (28, 330).

4. The rotary drive system according to claim 1, 2 or 3,
wherein a plurality of said rotors (100, 200), each of which has said guide section (110, 210), are provided; and
wherein a plurality of said connecting members (38), each of which is connected with each guide section (110, 210) of each rotor (100, 200), are provided to said moving body (28, 330), whereby said rotors (100, 200) can be synchronously rotated.

5. The rotary drive system according to claim 4,
wherein said guide sections are levers (110, 210), one end of each lever (110, 210) is fixed to said rotor (100, 200), and the other end thereof is extended in the radial direction with respect to the axis of said rotor (100, 200).

## Patentansprüche

1. Drehantriebssystem mit:
einem sich bewegenden Körper (28, 330), der sich in einer zweidimensionalen Ebene (260) bewegen kann;
einem Antriebsmittel (30, 44, 224, 220, 222, 234, 236, 238, 340a, 340b, 340c, 340d) zum Bewegen des sich bewegenden Körpers (28, 330) ;
einem Ringlager (102a, 102b, 108, 202), das in einen Ring gebildet ist, wobei das Ringlager (102a, 102b, 108, 202) in einer Ebene parallel zu der zweidimensionalen Ebene (260) vorgesehen ist;
einem Rotor (100, 200), der durch das Ringlager (102a, 102b, 108, 202) gehalten ist, wobei der Rotor (100, 200) sich um seine eigene Achse drehen kann;
einem Führungsabschnitt (110, 210), der in einer radialen Richtung in Bezug auf die Achse des Rotors (100, 200) angeordnet ist; und
einem Verbindungsteil (38), das für den sich bewegenden Körper (28, 330) vorgesehen ist, wobei sich das Verbindungsteil (38) um seine eigene Achse parallel zu der Achse des Rotors (100, 200) drehen kann, wobei das Verbindungsteil (38) mit dem Führungsabschnitt (110, 210) verbunden ist und sich in der Längsrichtung davon bewegen kann, wodurch das Verbindungsteil (38) und der Führungsabschnitt (110, 210) den Rotor (100, 200) mit der Bewegung des sich drehenden Körpers (28, 330) drehen,
**dadurch gekennzeichnet,**
**daß** der Führungsabschnitt (110, 210) auf einer Fläche des Rotors (100, 200) vorgesehen ist.

2. Drehantriebssystem nach Anspruch 1, weiter mit:
einem ersten Führungsmittel (220, 222, 312a, 312b), das in der zweidimensionalen Ebene (260) vorgesehen ist und in einer ersten Richtung (X) angeordnet ist, wobei das erste Führungsmittel (220, 222, 312a, 312b) die Bewegung des sich bewegenden Körpers (28, 330) in der ersten Richtung (X) führt; und
einem zweiten Führungsmittel (30, 234, 236, 324a, 324b), das in der zweidimensionalen Ebene (260) vorgesehen ist und in einer zweiten Richtung (Y) senkrecht zu der ersten Richtung (X) angeordnet ist, wobei das zweite Führungsmittel (30, 234, 236, 324a, 324b) die Bewegung des sich bewegenden Körpers (28, 330) in der zweiten Richtung (Y) führt;
worin das Antriebsmittel ein erstes Antriebsmittel (224, 220, 222, 340a, 340b) zum Bewegen des sich bewegenden Körpers (28, 330) in der ersten Richtung (X) und ein zweites Antriebsmittel (30, 42, 238, 234, 236, 340c, 340d) zum Bewegen des sich bewegenden Körpers (28, 330) in der zweiten Richtung (Y) enthält.

3. Drehantriebssystem nach Anspruch 2,
worin das erste Führungsmittel ein Paar von ersten Führungen (220, 222, 312a, 312b) ist, die parallel in der ersten Richtung (X) angeordnet sind, und
worin das zweite Führungsmittel ein Paar von zweiten Führungen (30, 234, 236, 324a, 324b) ist, die parallel in der zweiten Richtung (Y) angeordnet sind;
weiter mit:
einer ersten sich bewegenden Führung (258, 328), die parallel zu den ersten Führungen (220, 222, 312a, 312b) angeordnet ist, wobei jedes Ende der ersten sich bewegenden Führung (258, 328) bewegbar mit jeder zweiten Führung (30, 234, 236, 324a, 324b) verbunden ist, wodurch die erste sich bewegende Führung (258, 328) sich in der zweiten Richtung (Y) entlang der zweiten Führungen (30, 234, 236, 324a, 324b) bewegen kann; und
einer zweiten sich bewegenden Führung (26, 256, 322), die parallel zu den zweiten Führungen (30, 234, 236, 324a, 324b) angeordnet ist, wobei jedes Ende der zweiten sich bewegenden Führung (26, 256, 322) bewegbar mit jeder ersten Führung (220, 222, 312a, 312b) verbunden ist, wodurch die zweite sich bewegende Führung (26, 256, 322) sich in der ersten Richtung (X) entlang der ersten Führungen (220, 222, 312a, 312b) bewegen kann,
worin der sich bewegende Körper (28, 330) sich auf der ersten sich bewegenden Führung (258, 328) und der zweiten sich bewegenden Führung (26, 256, 322) bewegen kann,
worin das erste Antriebsmittel (224, 220, 222, 340a, 340b) die zweite sich bewegende Führung (26, 256, 322) in der ersten Richtung (X) zusammen mit dem sich bewegenden Körper (28, 330) bewegt, und
worin das zweite Antriebsmittel (30, 42, 238, 234, 236, 340c, 340d) die erste sich bewegende Führung (258, 328) in die zweite Richtung (Y) zusammen mit dem sich bewegenden Körper (28, 330) bewegt.

4. Drehantriebssystem nach Anspruch 1, 2 oder 3,
bei dem eine Mehrzahl der Rotoren (100, 200), von denen jeder den Führungsabschnitt (110, 210) aufweist, vorgesehen ist; und
bei dem eine Mehrzahl der Verbindungsteile (38), von denen jedes mit jedem Führungsabschnitt (110, 210) eines jeden Rotors (100, 200) verbunden ist, für den sich bewegenden Körper (28, 330) vorgesehen ist, wodurch die Rotoren (100, 200) synchron gedreht werden können.

5. Drehantriebssystem nach Anspruch 4,
bei dem die Führungsabschnitte Hebel (110, 210) sind, wobei ein Ende eines jeden Hebels (110, 210) an dem Rotor (100, 200) befestigt ist und das andere Ende davon sich in die radiale Richtung in Bezug auf die Achse des Rotors (100, 200) erstreckt.

## Revendications

1. Système d'entraînement rotatif comprenant :
un corps mobile (28, 330) apte à se déplacer dans un plan bidimensionnel (260) ;
des moyens d'entraînement (30, 44, 224, 220, 222, 234, 236, 238, 340a, 340b, 340c, 340d) pour déplacer ledit corps mobile (28, 330) ;
un palier annulaire (102a, 102b, 108, 202) étant formé en un anneau, ledit palier annulaire (102a, 102b, 108, 202) étant prévu dans un plan parallèle au plan bidimensionnel (260) ;
un rotor (100, 200) retenu par ledit palier annulaire (102a, 102b, 108, 202), ledit rotor (100, 200) étant apte à tourner autour de son propre axe ;
une section de guidage (110, 210) étant agencée dans une direction radiale relativement à l'axe dudit rotor (100, 200) ; et
un élément de connexion (38) étant réalisé audit corps mobile (28, 330), ledit élément de connexion (38) étant apte à tourner autour de son propre axe parallèle à l'axe dudit rotor (100, 200), ledit élément de connexion (38) étant connecté à ladite section de guidage (110, 210) et étant apte à se déplacer dans la direction longitudinale de celui-ci par quoi ledit élément de connexion (38) et ladite section de guidage (110, 210) font tourner ledit rotor (100, 200) avec le mouvement dudit corps mobile (28, 330),
**caractérisé en ce que** ladite section de guidage (110, 210) est réalisée sur une face dudit rotor (100, 200).

2. Système d'entraînement rotatif selon la revendication 1, comprenant en outre :
un premier moyen de guidage (220, 222, 312a, 312b) étant prévu dans le plan bidimensionnel (260) et agencé dans une première direction (X), ledit premier moyen de guidage (220, 222, 312a, 312b) guidant le déplacement dudit corps mobile (28, 330) dans la première direction (X) ; et
un deuxième moyen de guidage (30, 234, 236, 324a, 324b) étant prévu dans le plan bidimensionnel (260) et agencé dans une seconde direction (Y) perpendiculaire à la première direction (X), ledit second moyen de guidage (30, 234, 236, 324a, 324b) guidant le déplacement dudit corps mobile (28, 330) dans la seconde direction (Y),
où ledit moyen d'entraînement comporte un premier moyen d'entraînement (224, 220, 222, 340a, 340b) pour déplacer ledit corps mobile (28, 330) dans la première direction (X), ainsi qu'un second moyen d'entraînement (30, 42, 238, 234, 236, 340c, 340d) pour déplacer ledit corps mobile (28, 330) dans la seconde direction (Y).

3. Système d'entraînement rotatif selon la revendication 2, où ledit premier moyen de guidage est constitué par une paire de premiers guides (220, 222, 312a, 312b) agencés parallèlement dans la première direction (X), et
où ledit second moyen de guidage est constitué par une paire de seconds guides (30, 234, 236, 324a, 324b) agencés parallèlement dans la seconde direction (Y),
comprenant en outre :
un premier guide mobile (258, 328) étant agencé parallèlement auxdits premiers guides (220, 222, 312a, 312b), chaque extrémité dudit premier guide mobile (258, 328) étant reliée d'une manière mobile à chaque second guide (30, 234, 236, 324a, 324b), par quoi ledit premier guide mobile (258, 328) est apte à se déplacer dans la seconde direction (Y) le long desdits seconds guides (30, 234, 236, 324a, 324b) ; et
un second guide mobile (26, 256, 322) étant agencé parallèlement auxdits seconds guides (30, 234, 236, 324a, 324b), chaque extrémité dudit second guide mobile (26, 256 , 322) étant connecté d'une manière mobile à chaque premier guide (220, 222, 312a, 312b), par quoi ledit second guide mobile (26, 256, 322) est apte à se déplacer dans la première direction (X) le long desdits premiers guides (220, 222, 312a, 312b),
où ledit corps mobile (28, 330) est apte à se déplacer sur ledit premier guide mobile (258, 328) et ledit second guide mobile (26, 256, 322),
où ledit premier moyen d'entraînement (224, 220, 222, 340a, 340b) déplace ledit second guide mobile (26, 256, 322) dans la première direction (X) ensemble avec ledit corps mobile (28, 330) et
où ledit second moyen d'entraînement (30, 42, 238, 234, 236, 340c, 340d) déplace ledit premier guide mobile (258, 328) dans la seconde direction (Y) ensemble avec ledit corps mobile (28, 330).

4. Système d'entraînement rotatif selon la revendication 1, 2 ou 3, où une pluralité desdits rotors (100, 200), chacun présentant ladite section de guidage (110, 210) est prévu ; et
où une pluralité desdits éléments de connexion (38) dont chacun est relié à chaque section de guidage (110, 210) de chaque rotor (100, 200) est prévue audit corps mobile (28, 330), par quoi lesdits rotors (100, 200) peuvent être entraînés en rotation d'une manière synchronisée.

5. Système d'entraînement rotatif selon la revendication 4, où lesdites sections de guidage sont des leviers (110, 210), une extrémité de chaque levier (110, 210) est fixée audit rotor (100, 200) et son autre extrémité est étendue dans la direction radiale relativement à l'axe dudit rotor (100, 200).
